# EUROPEAN PATENT SPECIFICATION

(11) **EP 3 802 443 B1**
(45) Date of publication and mention of the grant of the patent: **13.08.2025**
(21) Application number: 19725766.0
(22) Date of filing: 27.05.2019
(51) Int. Cl.: C03B 35/18, D04B 1/14, D03D 1/00, D04C 1/02, C22C 30/00, C22C 38/04, C22C 38/02, C22C 38/58, C22C 38/44, C22C 38/42, D04B 1/00, D02G 3/00, D04B 21/14, C03B 40/00, D02G 3/12, D03D 15/513

(54) **HEAT RESISTANT SEPARATION FABRIC, METHOD OF USING THE HEAT RESISTANT SEPARATION FABRIC, A SPUN FIBER YARN**
WÄRMBESTÄNDIGES TRENNGEWEBE, VERFAHREN ZUR VERWENDUNG DES WÄRMBESTÄNDIGEN TRENNGEWEBES, SPINNFASERGARN
TISSU DE SÉPARATION RÉSISTANT À LA CHALEUR, MÉTHODE D'UTILISATION DU TISSU DE SÉPARATION RÉSISTANT À LA CHALEUR, FIL DE FIBRES FILÉES

(30) Priority: 11.06.2018 EP 18177016
(43) Date of publication of application: 14.04.2021
(73) Proprietor: NV Bekaert SA, 8550 Zwevegem (BE)
(72) Inventor: VLEURINCK, Jos, 9340 Oordegem (BE); DE RIDDER, Frank, 9308 Hofstade - Aalst (BE); VERGOTE, Véronique, 7700 Moeskroen (BE); DE BRUYCKER, Ruben, 9052 Zwijnaarde (BE); DE BAERDEMAEKER, Jérémie, 8570 Anzegem (BE)
(74) Representative: Zhang, Li
(86) International application number: PCT/EP2019/063668
(87) International publication number: WO 2019/238401

(56) References cited:
- WO-A1-00/40792
- WO-A1-2010/038730
- WO-A1-2014/177611
- WO-A1-2016/131643
- FR-A- 1 122 331
- JP-A- 2001 164 442
- JP-A- H1 179 766
- US-A1- 2011 079 589
- "PROPERTIES AND SELECTION : IRONS, STEELS & HIGH PERFORMANCE ALLOYS.", 1 March 1990, METALS PARK, OHIO : AMERICAN SOCIETY FOR METALS, US, ISBN: 978-0-87170-377-4, article S D WASHKO ET AL: "Wrougt Stainless Steels", pages: 841 - 848, XP055501780, 016775
- WERKSTOFFDATENBLATT NR ET AL: "Alloy 926 Cronifer 1925 hMo", 1 September 2017 (2017-09-01), XP055518944, Retrieved from the Internet <URL:http://www.vdm-metals.com/fileadmin/user_upload/Downloads/Data_Sheets/Datenblatt_VDM_Alloy_926.pdf> [retrieved on 20181025]

## Description

### Technical Field

The invention relates to a heat resistant separation fabric and metal fiber yarns used for manufacturing such a heat resistant separation fabric. The heat resistant separation fabric material can be used as tool covering in the processing of glass products, e.g. for the automotive industry, where the fabric is in contact with glass at a temperature above the softening point of glass.

### Background Art

Tempered and laminated bended glass is extensively used for side-lites, back-lites, laminated windshields and laminated sunroofs for automotive business to provide good resistance to breakage as well as an aesthetically appealing shape that complements the design of the vehicle. In order to perform the bending, sheet glass must be heated to its deformation point and then bent to the required shape. In a typical glass bending technology, a plenum or other suitable means is located below rolls of the conveyors to blow the gas upwardly against the heated sheet of glass that is lifted upwardly against the holder. Pressurized gas such as heated air in the furnace heating chamber is supplied to the plenum. The pressurized gas is forced from the plenum through an array of gas jet pumps which amplify the flow to provide fluid pressure on the underside of the glass sheet in an amount sufficient to lift it above the conveyor into engagement with the holder. A vacuum is drawn with the holder embodiments having the surfaces so as to assist the upwardly blown gas in lifting the sheet of glass off the conveyor. Vertical movement of the holder downwardly prior to the lifting facilitates the lifting of the glass into engagement with the holder and subsequent upward movement of the holder then allows the mould to move under the holder to receive the sheet of glass for bending.

On the other hand, in order to prevent damage to the tooling (e.g. bending moulds, transport rollers) brought into contact with the heated glass plate, the tooling is normally covered by means of a heat resistant separation material, mostly a cloth made out of fibers. The use of textile fabrics out of 100% glass fibers is known. The disadvantage of these glass fiber cloths is that it doesn't resist the mechanical action during the glass shaping process. Also the use of textile fabrics, partially or fully consisting out of metal fibers is known. Using these fabrics as mould coverings, the mechanical action of the bending process is withstand better. WO2011/116992A2 discloses a heat resistant separation fabric for use as tool covering in the production of car glass. Such heat resistant separation materials can be knitted fabrics, made from yarns spun with stainless steel fibers. Alloys such as AISI 316 or AISI 316L, AISI 347, or other alloys out of the AISI 300 type can be used. WO00/40792 A1 discloses a knitted fabric comprising steel fibers. The knitted fabric has increased number of stitches to reduce the risks for markings on the glass. Another publication WO2014/177611 A1 discloses the use of a cover for rotating elements supporting a sheet of material like glass or for the element used to bring the sheet of material in the required shape. The cover can be knitted fabric, woven fabric or fiber web built from a nickel-chromium alloy material.

However, during the operation of glass bending, when a glass is not present, e.g. by glass breakage or by some other incidence, upwardly blown gas from the plenum will be sucked by the vacuum drawn from the holder through textile fabrics. The textile fabric will then be exposed to the higher amount of hot oxygen flow that will be inflated in the furnace since the upwardly blown gas is a hot air stream with a temperature, e.g. at about 680°C. As a result, the temperature of the textile fabric will increase to about or even more than 680°C what makes that the textile fabric starts to carbonize. This higher temperature together with higher amount of oxygen and the carbonization of the textile fabric may induce burning or combustion of the textile fabric on the tooling.

### Disclosure of Invention

It is a general object of the invention to avoid the drawbacks of the prior art.

It is a particular object of the invention to provide a heat resistant separation fabric that achieves desirable safety features and appropriate serviceability.

It is another object of the invention to provide a heat resistant separation fabric that is robust and has a long lifetime in multiple time use for use as tool covering in the production of glass products at high temperatures over 580°C.

Yet another object of the invention to provide a heat resistant separation fabric that can be manufactured by existing process.

The heat resistant separation fabrics for use as tool covering in the production process of glass products, e.g. of car glass, where the tool covering is in contact with glass at a temperature above the softening point of glass can be made from metal fiber yarns.

A heat resistant separation fabric for use as tool covering in the production of glass products at temperatures over 580°C according to the invention is defined in the independent claim 1. A spun fiber yarn according to the invention is defined in the independent claim 12. A method of using a heat resistant separation fabric according to the invention is defined in claim 13. Preferred embodiments are defined in the dependent claims.

According to the invention, there is provided a heat resistant separation fabric for use as tool covering in the production of glass products at temperatures over 580°C, wherein the heat resistant separation fabric is made of fiber yarns, and wherein said fiber yarns comprise metal fibers out of a first material consisting of:
18 to 21 weight percent chromium (Cr),
23 to 26 weight percent nickel (Ni),
5.5 to 7 weight percent molybdenum (Mo), and
40 to 50 weight percent iron (Fe).

Preferably, said first material contains 40 to 46 weight percent Fe. More preferably, said first material contains 40 to 45 weight percent Fe. For instance, said first material may contain 40, 41, 42, 43, 44 or 45 weight percent Fe. The first material contains limited amount of Fe which can be oxidized into iron oxide. Iron oxide is detrimental to the properties of the heat resistant separation fabric.

Moreover, said first material may also contain any one or more than one of silicon (Si), manganese (Mn), and copper (Cu), each in a range between 0.2 weight percent to 2 weight percent, and preferably between 0.3 weight percent to 1.3 weight percent.

In addition, the first material may contain any one or more than one of the following elements, e.g. carbon (C), nitrogen (N), cobalt (Co), magnesium (Mg), neodymium (Nb), phosphorus (P), sulphur (S), tin (Sn), titanium (Ti), vanadium (V) and tungsten (W), each less than 0.5 weight percent and preferably less than 0.15 weight percent, e.g. between 0.0005 weight percent to 0.15 weight percent.

The heat resistant separation fabrics according to the present invention can be made from different fiber yarns. The heat resistant separation fabrics according to the present invention can also be made from blends of metal fiber yarns with any other heat resistant fibers, e.g. glass or ceramic fibers. The fiber yarns according to the present invention may comprise carbon fibers or silica fibers. For instance, the heat resistant separation fabric is made from a spun fiber yarn. The spun fiber yarn may comprises an intimate blend of staple fibers. The intimate blend comprises staple fibers out of said first material and staple fibers out of a second material having a different composition than the above first material. The spun metal fiber yarn of the invention can be a plied yarn, e.g. a two-ply or a three-ply yarn, e.g. as disclosed in WO2009/147114. Preferably, each of the plies of the yarn can comprise an intimate blend of staple fibers, wherein the intimate blend comprises staple fibers out of the first material and staple fibers out of a second material having a different composition than the first material. More preferably, all plies of the plied yarn have the same fiber composition. In a preferred embodiment, the spun metal fiber yarn consists out of an intimate blend of staple fibers out of the first material and staple fibers out of a second material having a different composition than the first material.

As an example, the spun metal fiber yarn is a plied yarn. The plied yarn comprises at least one ply comprising or consisting out of a single yarn out of staple fibers out of the first material; and at least one ply comprising or consisting out of a single yarn out of staple fibers out of a second material.

As another example, the spun metal fiber yarn may comprise or consist out of a core-sheath metal fiber yarn. The core of the yarn comprises or consists out of staple fibers out of the first material; and the sheath comprises or consists out of staple fibers out of a second material.

Yet another example, the metal fiber yarn comprises a strand. The strand comprises or consists out of staple fibers out of the first material. The strand is wrapped with a strand comprising or consisting out of staple fibers out of a second material.

The second material can be a stainless steel alloy of the 300 series according to ASTM A313. Preferred examples are 316, 316L and 347 (according to ASTM A313). The second material can also be any other heat resistant material like glass, silica, carbon, ceramic and/or basalt.

As an example, in the yarn, the weight ratio of fibers out of the first material to the weight ratio of the fibers out of the second material is at least 0.5, more preferably at least 0.6.

In preferred embodiments, the heat resistant separation fabric consists out of spun metal fiber yarns out of said first material. It means that all yarns in the fabric are out of fibers out of the first material, i.e. the heat resistant separation fabric does not comprise other fiber yarn than said metal fiber yarns out of said first material.

Surprisingly, the heat resistant separation fabrics according to the present invention have shown significant flame retardant properties. When they are covered on tooling used in car glass production at temperatures over 580°C, the heat resistant separation fabric has prolonged lifetime.

Limiting Oxygen Index (LOI) testing is used to measure flame retardant properties of the material. According to EN ISO 4589-2, Limiting Oxygen Index (LOI) is defined as the minimum concentration of oxygen, expressed as volume, in a mixture of oxygen and nitrogen that will support flaming combustion of a material. Previous LOI studies focus mostly on plastic and textiles. Generally, textiles having LOI values of 21 vol% or less burn rapidly, those having values in the range of 21 to 25 vol% burn slowly, and those with LOI more than 25 vol% exhibit some level of flame retardancy in air, which has an oxygen concentration of about 21 vol%.

The LOI of the heat separation fabric according to the invention is in general more than 35 vol%, for some examples is even more than 45 vol%, and for some preferred embodiments is even more than 55 vol%. The inventive heat resistant separation fabric presents an excellent flame retardant property.

On the other hand, the invention fiber fabric also provides better corrosion resistance, and comparable tensile strength than other available heat resistant separation fabric used in the same application.

In preferred embodiments, the equivalent diameter of the staple fibers out of the first material is between 6.5 and 22 µm, preferably between 8 and 12 µm. With equivalent diameter of the staple fibers is meant the diameter of a circle that has the same cross sectional area as the cross section of the fiber that is not necessarily having a circular cross section.

In preferred embodiments, the equivalent diameter of the staple fibers out of the second material is between 6.5 and 22 µm, preferably between 8 and 12 µm.

In a preferred embodiment, the staple fibers out of the first material and the staple fibers out of the second material have substantially a same equivalent diameter, e.g. 12 µm.

Preferably, the staple fibers out of the first material and/or the staple fibers out of the second material are manufactured using the known bundled drawing technology, as is e.g. described in in US-A-2050298.

Preferred yarn counts of the spun metal fiber yarn are between 7.5 and 4.25 Nm (meaning between 133 tex and 235 tex), more preferably between 9 Nm and 5 Nm (meaning between 110 tex and 200 tex). Preferably, such yarns are two ply or three ply yarns.

The heat resistant separation fabric can be used as tool covering in the production of glass products at temperatures over 580°C, more preferably over 680°C. The heat resistant separation fabric comprises or consists out of spun metal fiber yarns as in any embodiment of the invention. Preferably, the heat resistant separation fabric has a specific weight between 500 and 1800 g/m², more preferably between 700 and 1300 g/m².

As an example, the heat resistant separation fabric can be felts or tapes, e.g. quench tape. In a preferred embodiment, the heat resistant separation fabric can be a knitted (e.g. a weft knitted fabric), a woven or a braided fabric. WO00/40792, WO2011/117048, and WO2013/174698 disclose some fabric constructions of such heat resistant separation fabrics.

In an exemplary embodiment, the heat resistant separation fabric is a weft knitted fabric comprising or consisting out of spun metal fiber yarns as in the invention, for covering a mould for bending glass plates at elevated temperatures of at least 580°C, e.g. of at least 680°C.

In another exemplary embodiment, the heat resistant separation fabric is a sleeve, preferably a knitted sleeve, more preferably a weft knitted sleeve, for covering a roller.

According to the invention, there is provided a method of using a heat resistant separation fabric as in the invention. The method comprises the step of covering tooling in glass production with the heat resistant separation fabric. In use the temperature of the heat resistant separation materials is higher than 580°C, preferably higher than 680°C, more preferably higher than 700°C. The tooling covered with the heat resistant separation fabric is brought in contact with glass panels. Such tooling can e.g. be rollers for the transport of glass panels or moulds for bending glass panels.

### Mode(s) for Carrying Out the Invention

A metal fiber yarn that has been spun out of 100% by weight out of a first material. The first material has the following composition:
18 to 21 wt% Cr, e.g. 18.5 wt%, 19.6 wt%, or from 18.5 wt% to 19.6 wt%;
23 to 26 wt% Ni, e.g. 23.3 wt%, 24.7 wt% or from 23.3 wt% to 24.7 wt%;
5.5 to 7 wt% Mo, e.g. 5.7 wt%, 6.0 wt% or from 5.7 wt% to 6.0 wt%;
Si, Mn, and Cu in a range between 0.2 weight percent to 2 weight percent, e.g. 0.35 wt%, 0.37 wt%, or from 0.35 wt% to 0.37 wt% Si; 0.76 wt%, 0.81 wt%, or from 0.76 wt% to 0.81 wt% Mn; and 1.25 wt%, 1.33 wt%, or from 1.25 wt% to 1.33 wt% Cu;
40 to 50 wt% Fe, e.g. 44.5 wt%, 47.1 wt% or from 44.5 wt% to 47.1 wt%.

In addition, the material may contain one or more than one of the following elements, e.g. carbon (C), nitrogen (N), cobalt (Co), magnesium (Mg), neodymium (Nb), phosphorus (P), sulphur (S), tin (Sn), titanium (Ti), vanadium (V) and tungsten (W), each less than 0.15 wt%.

The metal fibers have an equivalent diameter of about 12 µm. The metal fibers have been made by means of bundled drawing. The bundles of fibers of continuous length made via bundled drawing have been transformed into staple fibers by means of stretch breaking. The yarns have been spun by means of ring spinning, on a long staple type ring spinning frame. The yarns have been ply twisted into a two ply yarn of count 11/2 Nm (90*2 tex). The plied yarn has been knitted into a single jersey fabric of 1050 g/m² that has been tested. This is sample A for the comparative testing.

The behavior of sample A has been compared with a sample of the same fabric construction but where the spun yarns consisted for 100% out of 12 µm equivalent diameter fibers out of 316L-related alloy (sample B for the comparison). The 316L-related alloy has the same specification as alloy 313L (according to ASTM A 313) but with a modified nickel content (between 12 and 15 % by weight), a modified chromium content (between 17 and 18 % by weight) and a modified molybdenum content (between 2 and 2.5 % by weight).

Both metal fiber types of sample A and sample B have been made by means of bundled drawing, as is e.g. described in US-A-2050298.

Inventive sample A showed the benefit that it can be removed from a tooling after use in hot glass processing, and be put on again and re-used for multiple times. A comparison was made at 680°C. Sample B showed much less lifetime in multiple use than sample A.

Limiting Oxygen Index (LOI) is measured for sample A and B. Sample B has a measured LOI of 39 vol% oxygen and flame time of 20 seconds. Sample A showed significantly better flame retardant property than sample B: there was no ignition at sample A at 55 vol% oxygen, which is the maximum oxygen volume that can be applied safely in the test.

Sample A showed excellent heat resistant properties at high temperature. After keeping the sample during 24 hours at 750°C, the sample still showed a good appearance and good performance characteristics, such as strength and elongation of the sample in tensile loading. Sample A and sample B have been tested in cyclic impact loading mode at a temperature of 680°C. Inventive sample A showed a comparable wear and less damage in the cyclic impact loading test than sample B.

Sagging is the heat resistant separation fabric coming somewhat loose from the surface of the tooling when the tooling is brought in use at high temperature. Sagging is believed to be caused by creep phenomena in the fibers. Sagging can cause quality problems in glass that is contacted by a sagging fabric. In sagging simulation, a fabric is clamped in a ring. The ring with the clamped sample is put in an oven at high temperature (here 680°C), a plunger is pushed into the fabric until a specific force is attained, after which the plunger is withdrawn. This is repeated 500 times. Sagging is expressed as the increase in distance the plunger has to travel before it touches the fabric and force is build up. In the sagging test, sample A behaviors lightly better than sample B: Sample B showed a result of 30.6 mm, whereas sample A showed a result of 30.1 mm.

Sample A has been analyzed via Scanning Electron Microscopy (SEM) after heating it to 780°C in air. Surprisingly, it was observed that the fibers out of the first material had not been much attacked by the heating in air.

The above examples have been made with fibers of 12 µm equivalent diameter. The invention is not limited to fibers of this equivalent diameter. The use of the invention is not limited to the metal alloys of the specific examples described in the section Mode(s) for Carrying Out the Invention. Also other yarn counts can be made besides the yarn counts of the specific examples.

## Claims

1. A heat resistant separation fabric for use as tool covering in the production of glass products at temperatures over 580°C, wherein the heat resistant separation fabric is made of fiber yarns, and wherein said fiber yarns comprise metal fibers out of a first material consisting of:
18 to 21 weight percent chromium,
23 to 26 weight percent nickel,
5.5 to 7 weight percent molybdenum,
40 to 50 weight percent iron,
optionally one or more than one of silicon, manganese, and copper, each in a range between 0.2 weight percent to 2 weight percent, and
optionally one or more than one of carbon, nitrogen, cobalt, magnesium, neodymium, phosphorus, sulphur, tin, titanium, vanadium and tungsten, each less than 0.15 weight percent.

2. A heat resistant separation fabric as in claim 1, wherein said first material contains 40 to 46 weight percent iron.

3. A heat resistant separation fabric as in claim 1 or 2, wherein said heat resistant separation fabric consists out of fiber yarns out of said first material.

4. A heat resistant separation fabric as in any one of claims 1 or 2, wherein said fiber yarns comprise fibers out of a second material.

5. A heat resistant separation fabric as in claim 4, wherein said second material is a stainless steel alloy of the 300 series according to ASTM A313 including 316, 316L and 347, glass, silica, carbon, ceramic and/or basalt.

6. A heat resistant separation fabric as in any one of the preceding claims, wherein the equivalent diameter of said fiber yarns is 12 µm.

7. A heat resistant separation fabric as in any one of the preceding claims, wherein said fiber yarns are spun yarns.

8. A heat resistant separation fabric as in any one of the preceding claims, wherein said heat resistant separation fabric is a sleeve for covering a roller.

9. A heat resistant separation fabric as in any one of the preceding claims, wherein said heat resistant separation fabric is a knitted, a woven or a braided fabric.

10. A heat resistant separation fabric as in any one of claims 1 to 7, wherein said heat resistant separation fabric is a felt or a tape, e.g. quench tape.

11. A heat resistant separation fabric as in any one of the preceding claims, wherein the Limited Oxygen Index according to ISO 4589-2 of said heat resistant separation fabric is more than 45 vol% oxygen.

12. A spun fiber yarn, comprising fibers out of alloy consisting of:
18 to 21 weight percent chromium,
23 to 26 weight percent nickel,
5.5 to 7 weight percent molybdenum,
40 to 50 weight percent iron, and
optionally one or more than one of silicon, manganese, and copper, each in a range between 0.2 weight percent to 2 weight percent, and
optionally one or more than one of carbon, nitrogen, cobalt, magnesium, neodymium, phosphorus, sulphur, tin, titanium, vanadium and tungsten, each less than 0.15 weight percent.

13. Method of using a heat resistant separation fabric as in any of the claims 1 to 11, comprising the step of covering tooling in glass production with the heat resistant separation fabric;
wherein in use the temperature of the heat resistant separation fabric is higher than 580°C; and
wherein the tooling covered with the heat resistant separation fabric is brought in contact with glass panels.

## Patentansprüche

1. Hitzebeständiges Trenngewebe zur Verwendung als Werkzeugabdeckung bei der Herstellung von Glasprodukten bei Temperaturen über 580 °C, wobei das hitzebeständige Trenngewebe aus Fasergarnen besteht und wobei die Fasergarne Metallfasern aus einem ersten Material umfassen, das besteht aus:
18 bis 21 Gewichtsprozent Chrom,
23 bis 26 Gewichtsprozent Nickel,
5,5 bis 7 Gewichtsprozent Molybdän,
40 bis 50 Gewichtsprozent Eisen,
gegebenenfalls einem oder mehr als einem von Silicium, Mangan und Kupfer, jeweils in einem Bereich zwischen 0,2 Gewichtsprozent und 2 Gewichtsprozent, und
gegebenenfalls einem oder mehr als einem von Kohlenstoff, Stickstoff, Cobalt, Magnesium, Neodym, Phosphor, Schwefel, Zinn, Titan, Vanadium und Wolfram, jeweils weniger als 0,15 Gewichtsprozent.

2. Hitzebeständiges Trenngewebe nach Anspruch 1, wobei das erste Material 40 bis 46 Gewichtsprozent Eisen enthält.

3. Hitzebeständiges Trenngewebe nach Anspruch 1 oder 2, wobei das hitzebeständige Trenngewebe aus Fasergarnen aus dem ersten Material besteht.

4. Hitzebeständiges Trenngewebe nach einem der Ansprüche 1 oder 2, wobei die Fasergarne Fasern aus einem zweiten Material umfassen.

5. Hitzebeständiges Trenngewebe nach Anspruch 4, wobei das zweite Material eine Edelstahllegierung der 300er-Reihe nach ASTM A313, einschließlich 316, 316L und 347, Glas, Siliciumdioxid, Kohlenstoff, Keramik und/oder Basalt ist.

6. Hitzebeständiges Trenngewebe nach einem der vorstehenden Ansprüche, wobei der äquivalente Durchmesser der Fasergarne 12 µm beträgt.

7. Hitzebeständiges Trenngewebe nach einem der vorstehenden Ansprüche, wobei die Fasergarne gesponnene Garne sind.

8. Hitzebeständiges Trenngewebe nach einem der vorstehenden Ansprüche, wobei das hitzebeständige Trenngewebe eine Hülle zum Bedecken einer Walze ist.

9. Hitzebeständiges Trenngewebe nach einem der vorstehenden Ansprüche, wobei das hitzebeständige Trenngewebe ein gewirktes, ein gewebtes oder ein geflochtenes Gewebe ist.

10. Hitzebeständiges Trenngewebe nach einem der Ansprüche 1 bis 7, wobei das hitzebeständige Trenngewebe ein Filz oder ein Band, z.B. ein Kühlband, ist.

11. Hitzebeständiges Trenngewebe nach einem der vorstehenden Ansprüche, wobei der Limited Oxygen Index nach ISO 4589-2 des hitzebeständigen Trenngewebes mehr als 45 Vol.-% Sauerstoff beträgt.

12. Gesponnenes Fasergarn umfassend Fasern aus einer Legierung bestehend aus:
18 bis 21 Gewichtsprozent Chrom,
23 bis 26 Gewichtsprozent Nickel,
5,5 bis 7 Gewichtsprozent Molybdän,
40 bis 50 Gewichtsprozent Eisen, und
gegebenenfalls einem oder mehr als einem von Silicium, Mangan und Kupfer, jeweils in einem Bereich zwischen 0,2 Gewichtsprozent und 2 Gewichtsprozent, und
gegebenenfalls einem oder mehr als einem von Kohlenstoff, Stickstoff, Cobalt, Magnesium, Neodym, Phosphor, Schwefel, Zinn, Titan, Vanadium und Wolfram, jeweils weniger als 0,15 Gewichtsprozent.

13. Verfahren zur Verwendung eines hitzebeständigen Trenngewebes nach einem der Ansprüche 1 bis 11, umfassend den Schritt des Bedeckens von Werkzeugen bei der Glasherstellung mit dem hitzebeständigen Trenngewebe;
wobei in Verwendung die Temperatur des hitzebeständigen Trenngewebes höher als 580 °C ist; und
wobei das mit dem hitzebeständigen Trenngewebe bedeckte Werkzeug mit Glasscheiben in Kontakt gebracht wird.

## Revendications

1. Tissu de séparation résistant à la chaleur, destiné à être utilisé en tant que revêtement d'outil pour la fabrication de produits en verre à des températures supérieures à 580 °C, le tissu de séparation résistant à la chaleur étant constitué de fils de fibres, et lesdites fils de fibres comprenant des fibres métalliques constituées d'un premier matériau constitué de :
18 à 21 pour cent en poids de chrome,
23 à 26 pour cent en poids de nickel,
5,5 à 7 pour cent en poids de molybdène,
40 à 50 pour cent en poids de fer,
facultativement l'un ou plusieurs parmi le silicium, le manganèse et le cuivre, chacun dans une plage comprise entre 0,2 pour cent en poids et 2 pour cent en poids, et facultativement l'un ou plusieurs parmi le carbone, l'azote, le cobalt, le magnésium, le néodyme, le phosphore, le soufre, l'étain, le titane, le vanadium et le tungstène, chacun à moins de 0,15 pour cent en poids.

2. Tissu de séparation résistant à la chaleur selon la revendication 1, dans lequel ledit premier matériau contient de 40 à 46 pour cent en poids de fer.

3. Tissu de séparation résistant à la chaleur selon la revendication 1 ou 2, ledit tissu de séparation résistant à la chaleur étant constitué de fils de fibres constitués dudit premier matériau.

4. Tissu de séparation résistant à la chaleur selon l'une quelconque des revendications 1 ou 2, dans lequel lesdits fils de fibres comprenant des fibres constituées d'un deuxième matériau.

5. Tissu de séparation résistant à la chaleur selon la revendication 4, dans lequel ledit deuxième matériau est un alliage d'acier inoxydable de la série 300 selon ASTM A313, comprenant les aciers 316, 316L et 347, le verre, la silice, le carbone, la céramique et/ou le basalte.

6. Tissu de séparation résistant à la chaleur selon l'une quelconque des revendications précédentes, dans lequel le diamètre équivalent desdits fils de fibres est de 12 µm.

7. Tissu de séparation résistant à la chaleur selon l'une quelconque des revendications précédentes, dans lequel lesdits fils de fibres sont des fils filés.

8. Tissu de séparation résistant à la chaleur selon l'une quelconque des revendications précédentes, **caractérisé en ce que** le tissu de séparation résistant à la chaleur est un manchon destiné à recouvrir un rouleau.

9. Tissu de séparation résistant à la chaleur selon l'une quelconque des revendications précédentes, ledit tissu de séparation résistant à la chaleur étant un tissu tricoté, tissé ou tressé.

10. Tissu de séparation résistant à la chaleur selon l'une quelconque des revendications 1 à 7, ledit tissu de séparation résistant à la chaleur étant un feutre ou un ruban, par exemple un ruban de trempe.

11. Tissu de séparation résistant à la chaleur selon l'une quelconque des revendications précédentes, l'indice d'oxygène limité selon ISO 4589-2 dudit tissu de séparation résistant à la chaleur étant supérieur à 45 % en volume.

12. Fil de fibres filées, comprenant des fibres constituées d'un alliage constitué de :
18 à 21 pour cent en poids de chrome,
23 à 26 pour cent en poids de nickel,
5,5 à 7 pour cent en poids de molybdène,
40 à 50 pour cent en poids de fer, et
facultativement l'un ou plusieurs parmi le silicium, le manganèse et le cuivre, chacun dans une plage comprise entre 0,2 pour cent en poids et 2 pour cent en poids, et facultativement l'un ou plusieurs parmi le carbone, l'azote, le cobalt, le magnésium, le néodyme, le phosphore, le soufre, l'étain, le titane, le vanadium et le tungstène, chacun à moins de 0,15 pour cent en poids.

13. Procédé d'utilisation d'un tissu de séparation résistant à la chaleur selon l'une quelconque des revendications 1 à 11, comprenant l'étape consistant à recouvrir un outillage dans la fabrication de verre avec le tissu de séparation résistant à la chaleur ;
lors de l'utilisation, la température du tissu de séparation résistant à la chaleur est supérieure à 580 °C ; et
l'outillage recouvert du tissu de séparation résistant à la chaleur étant mis en contact avec des panneaux de verre.
